(19) Europäisches Patentamt

European Patent Office

Office européen des brevets

(11) Veröffentlichungsnummer: **0 259 679 B1**

(12) **EUROPÄISCHE PATENTSCHRIFT**

(45) Veröffentlichungstag der Patentschrift: **21.08.91**

(21) Anmeldenummer: **87112212.3**

(22) Anmeldetag: **22.08.87**

Die Akte enthält technische Angaben, die nach dem Eingang der Anmeldung eingereicht wurden und die nicht in dieser Patentschrift enthalten sind.

(51) Int. Cl.⁵: **C09J 175/06, C08G 18/42, C08G 18/72, C08G 18/12, C08G 18/08**

(54) **Klebbstoff und die Verwendung des Klebstoffs zur Herstellung von Verklebungen.**

(30) Priorität: **04.09.86 DE 3630045**

(43) Veröffentlichungstag der Anmeldung: **16.03.88 Patentblatt 88/11**

(45) Bekanntmachung des Hinweises auf die Patenterteilung: **21.08.91 Patentblatt 91/34**

(84) Benannte Vertragsstaaten: **AT BE DE ES FR GB IT NL SE**

(56) Entgegenhaltungen:
**EP-A- 0 073 392     EP-A- 0 148 392
EP-A- 0 164 547     EP-A- 0 192 946
FR-A- 2 370 761     GB-A- 1 191 260**

(73) Patentinhaber: **BAYER AG**

**W-5090 Leverkusen 1 Bayerwerk(DE)**

(72) Erfinder: **Henning, Wolfgang, Dr.
Zur Linde 27
W-5067 Kürten(DE)**
Erfinder: **Hombach, Rudolf, Dr.
Johann-Janssen-Strasse 24
W-5090 Leverkusen(DE)**
Erfinder: **Meckel, Walter, Dr.
Zonser Strasse 9
W-4040 Neuss(DE)**
Erfinder: **Dollhausen, Manfred, Dr.
Herzogenfeld 21
W-5068 Odenthal(DE)**

EP 0 259 679 B1

**Beschreibung**

Die vorliegende Erfindung betrifft einen Klebstoff auf Basis einer wäßrigen Lösung oder Dispersion eines anionisch modifizierten Polyurethans und die Verwendung einer derartigen Lösung oder Disperion zur Herstellung von Verklebungen beliebiger Substrate.

Wäßrige Lösungen oder Dispersionen von Polyurethanen bzw. Polyurethan-Polyharnstoffen sind bekannt. Ihre Herstellung wird beispielsweise in den folgenden Literaturstellen beschrieben: DE-PS 880 485, DE-AS 1 044 404, US-PS 3 036 998, DE-PS 1 178 586, DE-PS 1 134 946, DE-AS 1 237 306, DE-OS 1 595 602, US-PS 3 756 992, DE-OS 2 019 324, DE-OS 2 035 732, DE-OS 2 446 440, DE-OS 2 651 506, US-PS 3 479 310 und angewandte Chemie 82, 35 (1970). Die bekannten wäßrigen Lösungen oder Dispersionen eignen sich für die verschiedensten Einsatzgebiete, u. a. auch zur Verklebung beliebiger Substrate.

Bei der Verwendung dieser Dispersionen zum Kleben von nichtsaugfähigen Substraten, wie z.B. Gummi, Metall, Weich-PVC, wird zur Vermeidung des Einschlusses von Wasser nach dem Wärmeaktivierverfahren gearbeitet. Hierbei wird der Dispersionsklebstoff auf das Substrat aufgebracht und nach vollständiger Verdunstung des Wassers die Klebstoffschicht durch Einwirkung von Wärme in einen klebfähigen Zustand überführt.

Ein wesentlicher Nachteil der Dispersion des genannten Standes der Technik ist darin zu sehen, daß die für die Aktivierung der Klebschicht notwendige Temperatur so hoch ist, daß häufig eine Schädigung des Substrates eintritt. So lassen sich z.B. Formsohlen aus thermoplastischem Kautschuk mit den z.Z. vorhandenen Polyurethan-Dispersionen nicht zufriedenstellend kleben, da bei den erforderlichen Temperaturen zur Aktivierung der Klebschicht eine Verformung des Sohlenmaterials eintritt.

Bemühungen, die Aktivierungstemperatur durch Zugabe von Lösungsmitteln, Weichmachern oder Harzen zu verringern, war mit einer unerwünschten Abnahme der Wärmefestigkeit der Klebungen verbunden.

Die in DE-OS 2 804 609 (= EP-B-O 003 521) beschriebene Verwendung von solchen Polyurethandispersionen als Klebstoff, die unter Verwendung von aliphatischen Diisocyanaten bei der Herstellung der Polyurethane hergestellt worden sind, führt zwar zu Klebeschichten einer guten Aktivierbarkeit, jedoch trocknen diese Dispersionen bei Raumtemperatur nicht homogen sondern schuppenförmig, d.h. nicht zusammenhängend. Dies führt insbesondere bei längerer Einwirkung von Feuchtigkeit zu einem starken Abfall der Klebekraft. Es war daher die der Erfindung zugrundeliegende Aufgabe, einen neuen Klebstoff auf Basis einer wäßrigen Lösung oder Dispersion eines Polyurethans zur Verfügung zu stellen, der nicht mit den genannten Nachteilen behaftet ist.

Diese Aufgabe konnte überraschenderweise durch Bereitstellung des nachstehend näher beschriebenen erfindungsgemäßen Klebstoffs gelöst werden. Dem erfindungsgemäßen Klebstoff liegen in Wasser lösliche bzw. dispergierbare Polyurethane zugrunde, bei deren Herstellung ausgewählte Polyesterdiole der nachstehend näher beschriebenen Art, sowie Gemische von mindestens zwei (cyclo)aliphatischen Diisocyanaten verwendet worden sind, und die im übrigen praktisch frei von eingebauten, innerhalb von end- und/ oder seitenständig angeordneten Polyetherketten vorliegenden Ethylenoxideinheiten sind. Die erfindungsgemäßen Klebstoffe gestatten die Herstellung von leicht aktivierbaren Klebeschichten und führen zu Verklebungen, die Wärmestandfestigkeiten aufweisen, die noch über den Anforderungen der Praxis liegen, und teilweise sogar höher liegen als Verklebungen auf Basis vergleichbarer, lösungsmittelhaltiger Klebstoffe.

Gegenstand der Erfindung ist ein Klebstoff, bestehend im wesentlichen aus einer wäßrigen Lösung oder Dispersion eines von 2 bis 200 Milliäquivalente pro 100 g Feststoff an chemisch eingebauten Carboxylat- und/oder Sulfonatgruppen aufweisenden Polyurethans auf Basis von

a) organischen Diisocyanaten,
b) organischen Polyhydroxylverbindungen des Molekulargewichtsbereichs 400 bis 10.000 und
d) aminischen oder hydrazinischen Kettenverlängerungsmitteln des Molekulargewichtsbereichs 32 bis 400,

dadurch gekennzeichnet, daß

a) es sich bei den Diisocyanaten a) um ein Gemisch, enthaltend 1,6-Diisocyanatohexan und 1-Isocyanato-3,3,5-trimethyl-5-isocyanatomethyl-cyclohexan handelt, in einer Menge von jeweils mindestens 10 Mol-%, bezogen auf die Gesamtmenge der Diisocyanate,
b) es sich bei der Komponente b) im wesentlichen um Polyesterdiole auf Basis von (i) Adipinsäure und (ii) Tetramethylendiol, Hexamethylendiol und Gemischen dieser Diole handelt und

wobei das Polyurethan praktisch frei von eingebauten, innerhalb von end- und/oder seitenständig angeordneten Polyetherketten vorliegenden Ethylenoxideinheiten ist.

Gegenstand der Erfindung ist auch die Verwendung von wäßrigen Lösungen oder Dispersionen der erfindungsgemäßen Klebstoffe, gegebenenfalls mit aus der Klebstofftechnologie bekannten Hilfs- und

2

Zusatzmitteln, als Klebstoff zur Herstellung von Verklebungen von beliebigen Substraten, insbesondere von Leder, Gummimaterialien, Kunststoffen und/oder weichmacherhaltigem Polyvinylchlorid mit sich selbst oder anderen Materialien.

Die DE-OS 2 651 506 (insbesondere Beispiel 1) beschreibt zwar bereits die Herstellung einer wäßrigen Polyurethandispersion unter Verwendung von zwei unterschiedlichen (cyclo)aliphatischen Diisocyanaten. Als Polyesterdiol wird jedoch ein solches eingesetzt, welches Dimethylolpropandiol-1,3 als Aufbaukomponente enthält. Außerdem wird ein einwertiger Polyetheralkohol zwecks Einführung von hydrophilen Ethylenoxid-Einheiten mitverwendet. Im Text der Vorveröffentlichung wird außerdem gesagt, daß die Dispersionen als Klebstoff geeignet sind. Wie jetzt gefunden wurde, sind jedoch Dispersionen, die aus den genannten, in Beispiel 1 der DE-OS 2 651 506 verwendeten Ausgangsmaterialien hergestellt worden sind, als Klebstoff weit weniger gut geeignet als die erfindungsgemäßen Dispersionsklebstoffe, bei deren Herstellung ausgewählte Polyesterdiole der unter b) genannten Art verwendet werden, und deren Hydrophilie praktisch ausschließlich auf das Vorliegen von ionischen Zentren zurückzuführen ist.

Im Rahmen der Erfindung umfaßt der Begriff "Polyurethan" auch Polyurethan-polyharnstoffe, d.h. hochmolekulare Verbindungen, die neben Urethan- auch Harnstoffgruppen aufweisen.

Auch in der DE-OS 2 645 779 wird bereits die Verwendung von Gemischen von unterschiedlichen Isocyanaten bei der Herstellung von Polyurethanen zur Erzielung spezieller Eigenschaften beschrieben. Gemäß dieser Vorveröffentlichung werden bei der Herstellung von in Wasser dispergierbaren Polyurethanen Kombinationen aus (i) aliphatischen oder cycloaliphatischen Diisocyanaten mit (ii) aromatischen Diisocyanaten verwendet. Derartige Dispersionen sind jedoch zu Lösung der der vorliegenden Erfindung zugrundeliegenden Aufgabe nicht geeignet, da wegen der Verwendung hoher Anteile aromatischer Diisocyanate die Lichtechtheit der Polyurethane nur unzureichend ist, so daß sie für viele Einsatzzwecke, beispielsweise für Verklebungen von hellen Schuhsohlenmaterialien nicht geeignet sind. Insbesondere ist es jedoch nicht möglich, durch Verwendung derartiger Diisocyanatgemische die Aktiviertemperatur der Klebeschicht zu erniedrigen.

Aus der EP-A-148 392 sind bereits Klebemittel auf Basis von Polyisocyanataddtionsprodukten bekannt, aber ohne Hinweis auf die erfindungsgemäße Merkmalskombination. Insbesondere wird in diesem Dokument die Anwesenheit von Ethylenoxideinheiten gefordert, die sich nachteilig z.B. auf Aktiviertemperatur und Wärmefestigkeit auswirkt.

Der erfindungsgemäße Klebstoff besteht im wesentlichen aus einer wäßrigen Lösung oder Dispersion eines Polyurethans. Der Klebstoff kann neben dieser wesentlichen Komponente gegebenenfalls auch die üblichen Hilfs- und Zusatzmittel der Klebstofftechnologie enthalten.

Zur Herstellung des Polyurethans geeignete Diisocyanate a) sind beispielsweise solche der allgemeinen Formel $Q(NCO)_2$, für welche Q für einen zweiwertigen aliphatischen Kohlenwasserstoffrest mit 4 bis 12 Kohlenstoffatomen oder einen zweiwertigen cycloaliphatischen Kohlenwasserstoffrest mit 6 bis 15 Kohlenstoffatomen steht. Der Begriff "cycloaliphatischer Kohlenwasserstoffrest" soll im Rahmen der Erfindung auch aliphatisch-cycloaliphatische Kohlenwasserstoffreste umfassen, wie sie beispielsweise durch Entfernung der Isocyanatgruppen aus 1-Isocyanato-3,3,5-trimethyl-5-isocyanatomethyl-cyclohexan oder ähnlichen aliphatisch-cycloaliphatischen Diisocyanaten erhalten werden. Dementsprechend steht der Begriff "cycloaliphatisches Diisocyanat" stellvertretend nicht nur für echte cycloaliphatische Diisocyanate, sondern auch für derartige aliphatisch-cycloaliphatische Diisocyanate.

Konkrete Beispiele geeigneter Diisocyanate a) sind 1,4-Diisocyanatobuten, 1,6-Diisocyanatohexan, 1,12-Diisocyanatododekan, 1,4-Diisocyanatocyclohexan, 1-Isocyanato-3,3,5-trimethyl-5-isocyanatomethylcyclohexan (IPDI), 4,4'-Diisocyanatodicyclohexylmethan oder 4,4'-Diisocyanato-dicyclohexylpropan-(2,2).

Erfindungswesentlich ist, daß bei der Herstellung des in Wasser gelöst oder dispergiert vorliegenden Polyurethans als Diisocyanatkomponente a) mindestens 1,6-Diisocyanatohexan und 1-Isocyanato-3,3,5-trimethyl-5-isocyanatomethyl-cyclohexan zum Einsatz gelangen, jeweils in einer Menge von 10 Mol-%, vorzugsweise in einer Menge von mindestens 20 Mol-% und besonders bevorzugt in einer Menge von mindestens 30 Mol-%, bezogen auf die Gesamtmenge der Komponente a). Es können auch Gemische von mehr als zwei Diisocyanaten eingesetzt werden, wobei, den gemachten Angaben entsprechend, beispielsweise das dritte Diisocyanat auch in einer Menge von unter 10 Mol-% im Gemisch vorliegen kann.

Zu den Reaktionspartnern der Isocyanatkomponente a) gehören

b) Dihydroxypolyester des Molekulargewichtsbereichs 400 bis 10.000, vorzugsweise 400 bis 5.000, im wesentlichen auf Basis von (i) Adipinsäure und (ii) Tetramethylendiol, Hexamethylendiol oder Gemischen dieser Diole.

Weitere, gegebenenfalls mitzuverwendende Aufbaukomponenten sind

c) mehrwertige Alkohole, insbesondere zweiwertige Alkohole des Molekulargewichtsbereichs 62 bis 399, insbesondere die entsprechenden Alkanpolyole wie z.B. Ethylenglykol, Propylenglykol, Tetramethylendiol, Hexamethylendiol, Glycerin, Trimethylolpropan oder Trimethylolethan oder auch niedermolekulare, Ethergruppen aufweisende Alkohole wie z.B. Diethylenglykol, Triethylenglykol, Dipropylenglykol oder Tripropylenglykol oder Aminoalkohole des Molekularbereiches 61 bis 399 wie z.B. Ethanolamin, Propanolamin, Diethanolamin oder Dipropanolamin. Die Verwendung von im Sinne der Isocyanat-Additionsreaktions trifunktionellen Verbindungen, wie beispielsweise den beiden letztgenannten Aminoalkoholen ist allerdings weniger bevorzugt, da dies zu einer unerwünschten Verzweigung des Moleküls führen würde. Die Mitverwendung derartiger trifunktioneller Aufbaukomponenten in geringen Mengen ist allerdings nicht ausgeschlossen. Beliebige Gemische der beispielhaft genannten Alkohole können ebenfalls beim erfindungsgemäßen Verfahren eingesetzt werden.

Die Aufbaukomponenten c) werden falls überhaupt, in einer Menge von bis zu 40 Äquivalent-%, bezogen auf die Gesamtmenge der Komponenten b) und c) mitverwendet. Die Angabe bezüglich der Äquivalentprozente bezieht auf die in den Komponenten b) und c) vorliegenden, gegenüber Isocyanatgruppen reaktionsfähigen Gruppen, wobei primäre Aminogruppen hier ebenso wie im Falle der Komponente d) als monofunktionelle Gruppen in die Berechnung eingehen.

Bei der Herstellung des dem erfindungsgemäßen Klebstoffs zugrundeliegenden Polyurethans werden aminische oder hydrazinische Kettenverlängerungsmittel d) mitverwendet. Es handelt sich hierbei um mindestens zwei aminische oder hydrazinische Aminogruppen aufweisende Verbindungen des Molekulargewichtsbereichs 32 bis 400 wie z.B. Ethylendiamin, Hexamethylendiamin, Isophorondiamin, 2,4-Diaminotoluol, 4,4'-Diaminodiphenylmethan, 4,4'-Diaminodicyclohexylmethan, Diethylentriamin, Triethylentetramin, Hydrazin bzw. Hydrazinhydrat. Derartige Aufbaukomponenten können auch in blockierter From, d.h. insbesondere in From der entsprechenden Ketimine bzw. Ketazine (Umsetzungsprodukte mit einfachen Ketonen wie Aceton, Methylethylketon oder Methylisobutylketon) eingesetzt werden. Bei Verwendung derartiger blockierter Kettenverlängerungsmittel erfolgt erst unter dem hydrolytischen Einfluß von Wasser eine Freisetzung der mit Isocyanatgruppen reaktionsfähigen Gruppen.

Das dem erfindungsgemäßen Klebstoff zugrundeliegende Polyurethan weist, bezogen auf Feststoff, einen Gehalt von 2 bis 200, vorzugsweise von 2 bis 150 und besonders bevorzugt von 5 bis 100 Milliäquivalenten pro 100 g Feststoff an Carboxylat- und/oder Sulfonatgruppen auf. Der Einbau derartiger ionischer Zentren gelingt in an sich bekannter Weise durch Mitverwendung von Aufbaukomponenten mit ionischen Gruppen (Carboxylat- und/oder Sulfonatgruppen) oder mit potentiellen ionischen Gruppen (Carboxyl- und/oder Sulfonsäuregruppen). Im Falle der Verwendung von Verbindungen mit potentiellen ionischen Gruppen der genannten Art erfolgt die zumindest teilweise Überführung der potentiellen ionischen Gruppen in die entsprechenden ionischen Gruppen vor- oder gleichzeitig mit der Vermischung des Polyurethans mit dem Wasser bei der Herstellung der Lösung bzw. Dispersion, beispielsweise mittels tert. Aminen wie z.B. Triethylamin oder mittels anorganische Basen wie z.B. Natronlauge. Falls z.B. eingebaute Carboxylgruppen nur teilweise neutralisiert werden, liegen in den Polyurethanen die Klebekraft oft erhöhende, freie Carboxylgruppen vor.

Zu den anionischen bzw. potentiell anionischen Aufbaukomponenten gehören beispielsweise die Sulfonatgruppen aufweisenden aliphatischen Diole gemäß DE-OS 2 446 440 oder DE-OS 2 437 218, Carboxylatgruppen oder in Carboxylatgruppen überführbare Carboxylgruppen aufweisenden Diole und/oder Diaminosulfonate der in CA-PS 928 323 beschriebenen Art, wie z.B. Natriumsalz der N-(2-Aminoethyl)-2-aminoethansulfon-säure, die Dimethylolpropionsäure oder deren Salze, beispielsweise das entsprechende Triethylammoniumsalz oder das Natriumsalz der N-(2-Aminoethyl)-2-aminopropionsäure.

In Abhängigkeit von der Art der gegenüber Isocyanatgruppen reaktionsfähigen Gruppen (Hydroxyl-bzw. Aminogruppen) und in Abhängigkeit vom Molekulargewicht dieser (potentiell) anionischen Aufbaukomponenten stellen diese Aufbaukomponenten einen Teil der Komponente b) ((potentiell) anionische Polyhydroxylverbindungen des Molekulargewichtsbereichs 400 bis 10000), der Komponente c) ((potentiell) anionische niedermolekularer Polyhydroxylverbindungen) oder der Komponente d) (anionische aminische Kettenverlängerungsmittel) dar. Bei der Herstellung der Polyurethane ist es weitgehend unerheblich, ob die ionischen Gruppen durch Mitverwendung entsprechender Aufbaukomponenten b), c) und/oder d) eingebaut werden.

Die Menge an anionischen Gruppen wird bei der Herstellung der Polyurethane stets so bemessen, daß die Löslichkeit bzw. Dispergierbarkeit der Polyurethane in Wasser gewährleistet ist. Die Mitverwendung von externen Emulgatoren wäre zwar im Prinzip denkbar, ist jedoch keinesfalls bevorzugt. Gegebenenfalls mitzuverwendende Emulgatoren sind beispielsweise ethoxyliertes Nonylphenol, Polyoxyethylenlaurylether oder Polyoxyethylenlaurat, -oleat oder -stearat, wobei diese Zusatzmittel im allgemeinen 8 - 50 Polyoxyethyleneinheiten pro Molekül aufweisen. Falls derartige externen Emulgatoren mitverwendet werden, können sie den zu dispergierenden Polyurethanen oder NCO-Prepolymeren vor dem Dispersionsschritt zugesetzt werden.

4

EP 0 259 679 B1

Bei der Herstellung der Polyurethane können gegebenenfalls Lösungsmittel mitverwendet werden. Hierbei handelt es sich vorzugsweise um organische Lösungsmittel mit einem bei Normaldruck unter 100°C liegenden Siedepunkt. Beispiele sind Benzol, Essigsäureethylester, Aceton, Methylethylketon, Diethylether, Tetrahydrofuran, Essigsäuremethylester, Acetonitril, Chloroform, Methylenchlorid, Tetrachlorkohlenstoff, 1,2-Dichlorethan, 1,1,2-Trichlorethan oder Tetrachlorethylen. Bevorzugt werden mit Wasser mischbare Lösungsmittel, ganz besonders bevorzugt Aceton verwendet.

Bei der Herstellung der Polyurethane wird nach den altbekannten Methoden der Herstellung von wäßrigen Polyurethandispersionen bzw. -lösungen verfahren. Dies bedeutet, daß entweder der Aufbau des Polyurethanmoleküls zumindest teilweise in Gegenwart von Wasser erfolgt, so daß unmittelbar eine wäßrige Lösung bzw. Dispersion erhalten wird, oder aber, daß das erfindungsgemäße Verfahren in Abwesenheit von Wasser bis Beendigung des Aufbaus des Makromoleküls durchgeführt wird, worauf sich eine an sich bekannte Überführung des Polyurethans in eine wäßrige Lösung bzw. Dispersion anschließt.

In beiden Fällen werden bei der Durchführung des Verfahrens der Herstellung der Polyurethanlösung oder -dispersion die genannten Aufbaukomponenten in solchen Mengen eingesetzt, daß das Äquivalentverhältnis aller am Aufbau beteiligten Isocyanatgruppen zu allen gegenüber Isocyanatgruppen reaktionsfähigen Gruppen mit Ausnahme des gegebenenfalls bei der Herstellung des Polyurethans bereits vorliegenden Wassers zwischen 2,5:1 und 0,7:1 vorzugsweise zwischen 2:1 und 1,2:1 liegt. Bei Verwendung eines hohen NCO-Überschusses entstehen hierbei NCO-Präpolymere, die mit dem als Lösungs- bzw. Dispergiermedium dienenden Wasser unter Kettenverlängerung abreagieren.

Vorzugsweise verfährt man bei der Durchführung des erfindungsgemäßen Verfahrens nach einer der folgenden Varianten:

1. gemäß dem "Acetonverfahren" wird in Analogie zu der Lehre der DE-OS 1 495 745 (= US-PS 3 479 310) bzw. zu der DE-OS 1 495 847 (= GB-PS 1 076 788) ein NCO-endständiges Prepolymer in der Schmelze oder auch gegebenenfalls in Gegenwart von Lösungsmitteln der bereits beispielhaft genannten Art hergestellt. Als Ausgangsmaterialien werden hierbei Diisocyanatgemische der unter a) genannten Art, höhermolekulare Polyhydroxylverbindungen der unter b) genannten Art, gegebenenfalls Kettenverlängerungsmittel der unter c) beispielshaft genannten Art, sowie solche der unter d) beispielhaft genannten Art und ionische Aufbaukomponente der oben beispielhaft genannten Art bzw. die entsprechenden potentiellen ionischen Aufbaukomponenten eingesetzt. Im allgemeinen wird hierbei zunächst unter Einhaltung eines Äquivalentverhältnisses von Isocyanatgruppen zu gegen Isocyanatgruppen reaktionsfähigen Gruppen von 1,2:1 bis 2,5:1 ein NCO-Prepolymer aus den Komponenten a), b) und gegebenenfalls c) hergestellt, welches anschließend in einem geeigneten Lösungsmittel gelöst wird, worauf sich die Kettenverlängerung mit der Komponente d) in Lösung zum ausreagierten Polyurethan anschließt. Der Einbau der ionischen Gruppen erfolgt hierbei bei der Herstellung des Prepolymeren durch Mitverwendung entsprechender ionischer bzw. potentieller ionischer, Hydroxylgruppen aufweisender Aufbaukomponenten b) und/oder c) und/oder durch Mitverwendung von aminischen Kettenverlängerungsmitteln d), die ionische oder potentiell ionische anionische Gruppen aufweisen, wobei diese Überführung der potentiellen ionischen Gruppen in ionische Gruppen vor oder während der Dispergierung in Wasser erfolgt. Bei dieser Ausführungsform werden vorzugsweise difunktionelle Aufbaukomponenten der beispielhaft genannten Art eingesetzt. Das Äquivalentverhältnis zwischen Isocyanatgruppen des Prepolymeren und gegenüber Isocyanatgruppen reaktionsfähigen Gruppen der Komponente d) liegt hierbei im allgemeinen zwischen 1:0,2 und 1:1,1, vorzugsweise zwischen 1:0,5 und 1:0,9. Die Lösung des so erhaltenen Polyurethans wird dann mit Wasser vermischt, in welchem gegebenenfalls Neutralisationsmittel der beispielhaft genannten Art zwecks Neutralisation von gegebenenfalls vorliegenden potentiellen ionischen Gruppen vorliegen. Gewünschtenfalls kann im Anschluß an die Durchmischung mit dem Wasser das Lösungsmittel aus der entstandenen wäßrigen Polyurethandispersion abdestilliert werden.

2. Eine weitere Ausführungsform der Herstellung der wäßrigen Polyurethandispersionen entspricht der aus DE-OS 2 725 589, US-PS 4 269 748, US-PS 4 192 937 oder US-PS 4 292 226 bekannten Verfahrensweise, gemäß welcher blockierte Kettenverlängerungsmittel der unter d) genannten Art eingesetzt werden. Hierbei werden vorab hergestellte NCO-Prepolymere, die aus den oben beispielhaft genannten Ausgangsmaterialien a), b) und gegebenenfalls c) unter Mitverwendung von (potentiell) anionischen Aufbaukomponenten der obengenannten Art unter Einhaltung eines Äquivalentverhältnisses von Isocyanatgruppen zu gegenüber Isocyanatgruppen reaktionsfähigen Gruppen von 1,2:1 bis 2,5:1 in der Schmelze oder in Lösung hergestellt worden sind mit den genannten blockierten Kettenverlängerungsmitteln in der unter 1. genannten Menge vermischt und dieses Gemisch anschließend mit Wasser versetzt, wodurch das vorher blockierte Amin oder Hydrazin freigesetzt wird und als Kettenverlängerer des Prepolymeren reagiert. Auch hier kann das Wasser gegebenenfalls das Neutralisationsmittel für gegebenenfalls vorliegende potentielle ionische Gruppen gelöst enthalten.

5

EP 0 259 679 B1

Diese Verfahrensweise der Herstellung der Polyurethandispersionen kann auch entsprechend der Lehre der US-PS 4 192 937 bzw. der Lehre der US-PS 4 292 226 dahingehend abgewandelt werden, daß anstelle der genannten blockierten Kettenverlängerungsmittel d) Oxazolidine oder Amin salze als potentielle Kettenverlängerungsmittel eingesetzt werden. Eine derartige Arbeitsweise ist jedoch weniger bevorzugt.

Eine weitere Ausführungsform der Durchführung des erfindungsgemäßen Verfahrens besteht darin, NCO-Gruppen aufweisende Prepolymere der bereits unter 1. und 2. genannten Art als solche zunächst in Wasser zu dispergieren, welches gegebenenfalls das zur Neutralisation von gegebenenfalls vorliegenden potentiellen ionischen Gruppen benötigte Neutralisationsmittel enthält, und anschließend der so erhaltenen wäßrigen Dispersion ein aminisches oder hydrazinisches Kettenverlängerungs- oder Vernetzungsmittel der unter d) genannten Art mit freien Aminogruppen unter Einhaltung eines NCO/NH-Äquivalentverhältnisses von 1:0,2 bis 1:1,1, vorzugsweise 1:0,3 bis 1:0,98 zuzumischen. Die Kettenverlängerung wird dann bei 5 bis 90°C, vorzugsweise bis 80°C durchgeführt.

Grundsätzlich ist es auch möglich, wäßrige Polyurethanlösungen oder -dispersionen der in den erfindungsgemäßen Klebstoffen vorliegenden Art nach der Verfahrensweise der US-PS 3 756 992, d.h. nach dem "Schmelzdispergier-Verfahren" herzustellen. Hierbei werden hydrophil modifizierte Prepolymere der bereits unter 1. und 2. genannten Art mit Harnstoff, Ammoniak oder anderen geeigneten Verbindungen in der Schmelze in acylierte Amine überführt und diese vor, während oder nach der Zugabe von Wasser durch Reaktion mit Formaldehyd in Methylolgruppen aufweisende Verbindungen überführt. Die Methylolgruppen aufweisenden, in Wasser dispergierten oder gelösten Produkte können dann beispielsweise durch Erhitzen auf 50 - 150°C und eine hierdurch hervorgerufene Kondensationsreaktion der reaktiven Methylolgruppen in hochmolekulare Polyurethane überführt werden. Diese Art der Herstellung der Polyurethanlösungen oder -dispersionen ist allerdings weniger bevorzugt. Ganz besonders bevorzugt werden die den erfindungsgemäßen Klebstoffen zugrundeliegenden Polyurethanlösungen oder -dispersionen nach der oben unter 1. genannten Methode hergestellt.

Bei der Herstellung der wäßrigen Polyurethanlösungen oder -dispersionen wird im übrigen die Menge des Wassers so bemessen, daß 10 - 60 vorzugsweise 20 bis 50 gew.-%ige Lösungen bzw. Dispersionen der Polyurethane anfallen. Den Lösungen bzw. Dispersionen können die üblichen Hilfs- und Zusatzstoffe beigemischt werden, wie sie beispielsweise in US-PS 3 479 310, Kolonne 8, Zeile 40, Kolonne 9, Zeile 10 beschrieben sind.

Zur Einstellung einer günstigen Viskosität kann ein Lösungsmittel, wie z.B. Aceton oder Methylethylketon zugegeben werden.

Zur Erreichung spezieller Eigenschaften, z.B. zur Verlängerung der Kontaktbindezeit, können dem Klebestoff natürliche oder synthetische Harze, wie z.B. Phenolharze, Ketonharze, Colophoniumderivate, Phthalatharze, Acetyl- oder Nitrocellulose oder andere Stoffe, wie z.B. Silikatfüllstoffe, zugefügt werden.

Die im wesentlichen aus den beschriebenen Polyurethanlösungen oder -dispersionen bestehenden und gegebenenfalls Hilfsmittel der genannten beispielhaften Art enthaltenden, erfindungsgemäßen Klebstoffe eignen sich zum Verkleben beliebiger Substrate wie z.B. Papier, Pappe, Holz, Metall oder Leder, bevorzugt eignen sich die erfindungsgemäßen Klebstoffe jedoch zum Kleben von Gummimaterialien, von Kunststoffen, u. a. Polyurethan-Schaumstoffen mit kompakter Oberfläche und - soweit das zur Herstellung der Polyurethane eingesetzte Reaktionsgemisch in seinen speziellen Zusammensetzungen DE-PS 1 256 822 entspricht - zum Verkleben von weichmacherhaltigen Homo- oder Mischpolymerisaten des Vinylchlorids, vor allem zum Verkleben von Sohlen aus diesen Materialien und Schuhschäften aus Leder und Syntheseleder.

Die Verarbeitung des erfindungsgemäßen Klebstoffs erfolgt nach den bekannten Methoden der Klebstofftechnologie bezüglich der Verarbeitung von wäßrigen Dispersions- bzw. Lösungsklebstoffen.

Die nachstehenden Beispiele dienen deren weiteren Erläuterung der Erfindung. "Milliäquivalentprozent" bedeutet Milliäquivalente pro 100 g Feststoff.

Die Klebtechnischen Daten sind in einer Tabelle am Ende des experimentellen Teils zusammengefaßt.

Beispiele

Mit den nachstehend näher beschriebenen Klebstoffen (Beispiele 1 - 4) wurden Klebungen hergestellt. Als zu verklebender Werkstoff diente ein 4 mm dickes PVC-Material mit einem Gehalt von 30 % Dioctylphthalat als Weichmacher. Vor dem Aufbringen der Klebstoffe wurden die zu klebenden Oberflächen mit Schleifband der Körnung 40 gründlich gerauht. Die vom Schleifstauf befreiten Werkstoffe wurden mit einer 0,1 mm dicken Klebstoffschicht versehen und ca. 30 Min. bei Raumtemperatur abgelüftet.

Beurteilung der Filmbildung

6

Nach dem Ablüften wird der entstandene Klebstoffilm optisch beurteilt. Es wird zwischen einen homogenen, gleichmäßigen Film und einen schuppenförmig austrocknenden inhomogenen Film unterschieden.

Ermittlung der Aktiviertemperatur

Zur Ermittlung der Aktiviertemperatur wurden 1 cm breite Probestreifen 1 Stunde bei der gewünschten Temperatur im Trockenschrank gelagert. Danach wurden 2 Klebestreifen sofort unter leichtem Fingerdruck so zusammengelegt, daß eine überlappte Fläche von 1 x 1 cm entstand. Eine Klebung wurde als gut beurteilt, wenn unter diesen Bedingungen eine vollflächige Koaleszenz der beiden Klebstoffoberflächen eintrat und die Klebung unmittelbar nach ihrer Herstellung nur unter deutlichem Kraftaufwand zu trennen war. Die hierzu benötigten Temperaturen sind in nachstehender Tabelle 1 angegeben.

Prüfung der Wärmefestigkeit

Nach der Ablüftzeit von 30 Min. wurden die Klebstoffoberflächen durch Strahlungswärme innerhalb von 4 Sek. auf eine Temperatur von 80 - 85° C gebracht. Danach werden die Klebstreifen so zusammengelegt, daß eine überlappte Fläche von 2,5 x 2,5 cm vorliegt. Die Prüfkörper werden 10 Sek. mit einem Druck von 0,4 MPa gepreßt.

Zur Ermittlung der Wärmefestigkeit nach ASTM 816 D wurden die jeweils 9 Tage bei Raumtemperatur gelagerten Prüfkörper einem Scherversuch unterworfen. Hierbei wird der Prüfkörper mit einer Masse von 11 kg belastet. Nach 20-minütigem Tempern bei 40° C wird durch Erhöhen der Temperatur pro Minute um 0,25° C die Temperatur ermittelt, bei der die Klebung versagt. Die erreichten Temperaturen sind ebenfalls in der Tabelle 1 aufgeführt.

Beispiel 1

Ansatz:
337,50 g Adipinsäure-Tetramethylendiol-Polyester (OHZ 50) (PE)
1,34 g Dimethylolpropionsäure (DMPA)
26,87 g 1,6-Diisocyanatohexan (H)
17,76 g IPDI
800,00 g Aceton
14,04 g Natriumsalz der N-(2-Aminoethyl)-2-aminoethan sulfonsäure (45 %ig in Wasser) (AAS-Salz)
0,78 g Ethylendiamin (ADA)
557,00 g Wasser
NCO/OH-Verhältnis bei der Herstellung der Prepolymeren: 1,5:1
NCO/NH-Verhältnis bei der Kettenverlängerungsreaktion: 1:0,7 (bezogen auf gefundenen NCO-Wert)

Durchführung:

Der Polyester wird 30 Minuten bei 120° C im Vakuum unter Rühren entwässert und auf 85° C abgekühlt. Es wird DMPA eingerührt und nach 5 Minuten H und IPDI zugegeben. Es wird solange bei 85° C gerührt, bis ein konstanter NCO-Wert von 1,58 % erreicht ist. Langsam wird Aceton zugegeben, wobei die Temperatur bei 50° C gehalten wird. Der NCO-Wert der acetonischen Lösung beträgt 0,47 %. In die homogene acetonische Lösung wird eine Lösung von AAS und ADA in 28 g Wasser bei 50° C eingerührt. Nach 5 Minuten wird mit Wasser dispergiert und anschließend sofort das Aceton abdestilliert.
Man erhält eine feinteilige Dispersion mit einem Feststoffgehalt von 42,9 %, einer Fordbecherviskosität (4 mm Düse) von 13,8 sec und einem pH-Wert von 5,5.

Vergleichsbeispiel 1a

Ansatz:
337,50 g Adipinsäure-Tetramethylendiol-Polyester (OHZ 50) (PE)
1,34 g Dimethylolpropionsäure (DMPA)
13,92 g Toluylendiisocyanat 2,4/2,6-Isomeres (Gewichts verhältnis = 65:35, (T65))
35,52 g IPDI
800,00 g Aceton

7

16,04 g Natriumsalz der N-(2-Aminoethyl)-2-aminoethan sulfonsäure (45 %ig in Wasser) (AAS-Salz)
0,85 g Ethylendiamin (ADA)
540,00 g Wasser
NCO/OH-Verhältnis: 1,5:1
NCO/NH-Verhältnis: 1:0,7 (bezogen auf gefundenen NCO-Wert)

Durchführung

vgl. Beispiel 1

Es entsteht eine feinteilige Dispersion mit einem Feststoffgehalt von 41,4 %, einer Fordbecherviskosität (4 mm Düse) von 13,8 sec und einem pH-Wert von 5.

Vergleichsbeispiel 1b

Ansatz:
337,50 g Adipinsäure-Tetramethylendiol-Polyester (OHZ 50) (PE)
1,34 g Dimethylolpropionsäure (DMPA)
27,84 g Toluylendiisocyanat 2,4/2,6-Isomeres (65:35, T65)
17,76 g 1,6-Diisocyanatohexan(H)
800,00 g Aceton
16,04 g Natriumsalz der N-(2-Aminoethyl)-2-aminoethan sulfonsäure (45 %ig in Wasser) (AAS-Salz)
1,12 g Ethylendiamin (ADA)
520,00 g Wasser
NCO/OH-Verhältnis: 1,66:1
NCO/NH-Verhältnis: 1:0,7 (bezogen auf gefundenen NCO-Wert)

Durchführung

vgl. Beispiel 1

Es entsteht eine feinteilige Dispersion mit einem Feststoffgehalt von 40 %, einer Fordbecherviskosität (4 mm Düse) von 13,9 sec und einem pH-Wert von 5.

Vergleichsbeispiel 1c

Ansatz:
337,50 g Adipinsäure-Tetramethylendiol-Polyester (OHZ 50) (PE)
1,34 g Dimethylolpropionsäure (DMPA)
53,28 g IPDI
1027,00 g Aceton
20,68 g Natriumsalz der N-(2-Aminoethyl)-2-aminoethan sulfonsäure (45 %ig in Wasser) (AAS-Salz)
0,60 g Ethylendiamin (ADA)
600,00 g Wasser
NCO/OH-Verhältnis: 1,5:1
NCO/NH-Verhältnis: 1:0,8 (bezogen auf gefundenen NCO-Wert)

Durchführung

vgl. Beispiel 1

Es entsteht eine feinteilige Dispersion mit einem Feststoffgehalt von 41,9 %, einer Fordbecherviskosität (4 mm Düse) von 12,8 sec und einem pH-Wert von 5.

Vergleichsbeispiel 1d

Ansatz:
337,50 g Adipinsäure-Tetramethylendiol-Polyester (OHZ 50) (PE)

1,34 g Dimethylolpropionsäure (DMPA)
40,32 g 1,6-Diisocyanatohexan(H)
1100,00 g Aceton
18,83 g Natriumsalz der N-(2-Aminoethyl)-2-aminoethan sulfonsäure (45 %ig in Wasser) (AAS-Salz)
0,64 g Ethylendiamin (ADA)
560,00 g Wasser
NCO/OH-Verhältnis: 1,5:1
NCO/NH-Verhältnis: 1:0,8 (bezogen auf gefundenen NCO-Wert)

Durchführung

vgl. Beispiel 1

Es entsteht eine feinteilige Dispersion mit einem Feststoffgehalt von 42,4 %, einer Fordbecherviskosität (4 mm Düse) von 13,7 sec und einem pH-Wert von 5.

Vergleichsbeispiel 1e

Ansatz:
337,50 g Adipinsäure-Tetramethylendiol-Polyester (OHZ 50) (PE)
1,34 g Dimethylolpropionsäure (DMPA)
41,76 g Toluylendiisocyanat 2,4/2,6-Isomeres (65:35, T65)
1100,00 g Aceton
15,62 g Natriumsalz der N-(2-Aminoethyl)-2-aminoethan sulfonsäure (45 %ig in Wasser) (AAS-Salz)
1,14 g Ethylendiamin (ADA)
540,00 g Wasser
NCO/OH-Verhältnis: 1,5:1
NCO/NH-Verhältnis: 1:0,7 (bezogen auf gefundenen NCO-Wert)

Durchführung

vgl. Beispiel 1

Es entsteht eine Dispersion mit einem Feststoffgehalt von 42,4 %, einer Fordbecherviskosität (4 mm Düse) von 13,7 sec und einem pH-Wert von 5.

Vergleichsbeispiel 1f

Beispiel 1 der DE-OS 2 651 506 wird wiederholt. Die hier erhaltene wäßrige Dispersion mit einem Festkörpergehalt von 50 % wird bezüglich ihrer klebetechnischen Eigenschaften ebenfalls untersucht (vgl. Tabelle 1).

Beispiel 2

Ansatz:
337,50 g Adipinsäure-Tetramethylendiol-Polyester (OHZ 50) (PE)
2,03 g Dimethylolpropionsäure (DMPA)
25,09 g 1,6-Diisocyanatohexan(H)
16,54 g IPDI
835,00 g Aceton
18,17 g Natriumsalz der N-(2-Aminoethyl)-2-aminoethan sulfonsäure (45 %ig in Wasser) (AAS-Salz)
1,58 g Triethylamin (TEA)
619,00 g Wasser
NCO/OH-Verhältnis: 1,35:1
NCO/NH-Verhältnis: 1:0,83 (bezogen auf gefundenen NCO-Wert)

Durchführung

Das Prepolymer wird wie in Beispiel 1 hergestellt und in Aceton gelöst. Bei 50°C wird mit AAS verlängert, nach 5 Minuten mit TEA versalzt und nach weiteren 5 Minuten mit Wasser Dispergiert. Das Aceton wird unmittelbar anschließend abdestilliert.

Es entsteht eine feinteilige Dispersion mit einem Feststoffgehalt von 41,7 %, einer Fordbecherviskosität (4 mm Düse) von 20,8 sec und einem pH-Wert von 6.

Beispiel 3

Ansatz:

337,50 g Adipinsäure-Tetramethylendiol-Polyester (OHZ 50) (PE)

1,34 g Dimethylolpropionsäure (DMPA)

36,29 g 1,6-Diisocyanatohexan(H)

5,33 g IPDI

800,00 g Aceton

19,00 g Natriumsalz der N-(2-Aminoethanol)-2-amino ethansulfonsäure (45 %ig in Wasser) (AAS-Salz)

0,50 g Ethylendiamin (ADA)

580,00 g Wasser

NCO/OH-Verhältnis: 1,5:1

NCO/NH-Verhältnis: 1:0,8 (bezogen auf gefundenen NCO-Wert

Durchführung

vgl. Beispiel 1

Es entsteht eine feinteilige Dispersion mit einem Feststoffgehalt von 45,7 %, einer Fordbecherviskosität (4 mm Düse) von 22,3 sec und einem pH-Wert von 6.

Beispiel 4

Ansatz:

337,50 g Adipinsäure-Tetramethylendiol-Polyester (OHZ 50) (PE)

1,34 g Dimethylolpropionsäure (DMPA)

4,03 g 1,6-Diisocyanatohexan(H)

47,95 g IPDI

800,00 g Aceton

13,17 g Natriumsalz der N-(2-Aminoethyl)-2-amino ethansulfonsäure (45 %ig in Wasser) (AAS-Salz)

0,36 g Ethylendiamin (ADA)

540,00 g Wasser

NCO/OH-Verhältnis: 1,5:1

NCO/NH-Verhältnis: 1:0,8

Durchführung

vgl. Beispiel 1

Es entsteht eine feinteilige Dispersion mit einem Feststoffgehalt von 41 %, einer Fordbecherviskosität (4 mm Düse) von 12,4 sec und einem pH-Wert von 6.

## Tabelle 1:

| Bei-spiel | Isocyanat | Polyester Typ *) | Mol-% | Aktivier-temperatur | Filmbil-dung | Wärme-stand |
|---|---|---|---|---|---|---|
| 1 | H/IPDI | I | 66/34 | 45° C | homogen | 80,5° C |
| 1a | T/IPDI | I | 34/66 | 60° C | homogen | 89,5° C |
| 1b | H/T | I | 34/66 | 60° C | inhomogen | 78,0° C |
| 1c | IPDI | I | 100 | 65° C | homogen | 63,5° C |
| 1d | H | I | 100 | 45° C | inhomogen | 75,0° C |
| 1e | T | I | 100 | 65° C | homogen | 60,0° C |
| 1f | H/IPDI | II | 50/50 | >80° C | homogen | <40,0° C |
| 2 | H/IPDI | I | 66/34 | 40° C | homogen | 89,5° C |
| 3 | H/IPDI | I | 90/10 | 40° C | homogen | 79,5° C |
| 4 | H/IPDI | I | 10/90 | 45° C | homogen | 90,0° C |

*) I = Adipinsäure-Tetramethylendiol-Polyester

II = Adipinsäure-Hexamethylendiol-2,2-Dimethylpropandiol-1,3-Polyester

## Patentansprüche

1. Klebstoff, bestehend im wesentlichen aus einer wäßrigen Lösung oder Dispersion eines 2 - 200 Milliäquivalente pro 100 g Feststoff an chemisch eingebauten Carboxylat- und/oder Sulfonatgruppen, aufweisenden Polyurethans auf Basis von
   a) organischen Diisocyanaten,
   b) organischen Dihydroxyverbindungen des Molekulargewichtsbereichs 400 bis 10.000 und

11

EP 0 259 679 B1

d) aminischen oder hydrazinischen Kettenverlängerungsmitteln des Molekulargewichtsbereichs 32 bis 400,

dadurch gekennzeichnet, daß

a) es sich bei den Diisocyanaten a) um ein Gemisch enthaltend 1,6-Diisocyanatohexan und 1-Isocyanato-3,3,5-trimethyl-5-isocyanatomethyl-cyclohexan handelt, in einer Menge von jeweils mindestens 10 Mol-%, bezogen auf die Gesamtmenge der Diisocyanate,

b) es sich bei der Komponente b) im wesentlichen um Polyesterdiole auf Basis von (i) Adipinsäure und (ii) Tetramethylendiol, Hexamethylendiol und Gemischen dieser Diole handelt und

wobei das Polyurethan praktisch frei von eingebauten, innerhalb von end- und/oder seitenständig angeordneten Polyetherketten vorliegenden Ethylenoxideinheiten ist.

2. Klebstoff gemäß Anspruch 1, dadurch gekennzeichnet, daß die dem gelösten oder dispergierten Polyurethan zugrundeliegende Diisocyanat-Komponente aus einem Gemisch aus 1,6-Diisocyanatohexan und 1-Isocyanat-3,3,5-trimethyl-5-isocyanatomethyl-cyclohexan besteht.

3. Klebstoff nach wenigstens einem der vorhergehenden Ansprüche, dadurch gekennzeichnet, daß als Komponente b) Dihydroxypolyester des Molekulargewichtsbereiches von 400 bis 10.000 verwendet werden.

4. Klebstoffmassen nach wenigstens einem der vorhergehenden Ansprüche, dadurch gekennzeichnet, daß das Polyurethan zusätzlich auf Basis von c) mehrwertigen Alkoholen und/oder Aminoalkoholen des Molekulargewichtsbereichs 62 bis 399 in einer Menge von 0 bis 40 Äquivalentprozent, bezogen auf die Gesamtmenge der Komponenten b) und c) beruht.

5. Klebstoff nach Anspruch 4, dadurch gekennzeichnet, daß es sich bei der Komponente c) um Diole mit Sulfonat- oder Carboxylatgruppen oder in Carboxylatgruppen überführbare Carboxylgruppen handelt.

6. Verfahren zur Herstellung von Klebstoffen gemäß wenigstens einem der vorhergehenden Ansprüche durch Umsetzung von

a) organischen Diisocyanaten a) mit

b) organischen Polyhydroxylverbindungen b) des Molekulargewichtsbereichs 400 - 10.000

unter Einhaltung eines NCO/OH-Äquivalenzverhältnisses von 1,2 : 1 bis 2,5 : 1 und anschließende Kettenverlängerung der so erhaltenen, Isocyanatgruppen aufweisenden Prepolymeren mit

d) aminischen oder hydrazinischen Kettenverlängerungsmitteln d).

7. Verfahren nach Anspruch 6, dadurch gekennzeichnet, daß zusätzlich zu den Komponenten a), b) und d), mehrwertigen Alkoholen und/oder Aminoalkoholen c) des Molekulargewichtsbereichs 62 - 399 in einer Menge von 0 - 40 Äquivalent-%, bezogen auf die Gesamtmenge der Komponenten b) und c), umgesetzt werden.

8. Verwendung eines Klebstoffes gemäß wenigstens einem der vorhergehenden Ansprüche zur Herstellung von Verklebungen von Leder, Kunststoffen, Gummimaterialien und/oder weichmacherhaltigem Polyvinylchlorid mit sich selbst oder anderen Materialien.

## Claims

1. An adhesive consisting essentially of an aqueous solution or dispersion of a polyurethane - containing 2 to 200 milliequivalents per 100 g solids of chemically incorporated carboxylate and/or sulfonate groups - based on

a) organic diisocyanates,

b) organic dihydroxy compounds having a molecular weight in the range from 400 to 10,000 and

d) aminic or hydrazinic chain-extending agents having a molecular weight in the range from 32 to 400,

characterized in that

a) the diisocyanates a) are a mixture containing 1,6-diisocyanatohexane and 1-isocyanato-3,3,5-trimethyl-5-isocyanatomethyl cyclohexane in a quantity of at least 10 mol-% of each, based on the total quantity of the diisocyanates,

b) component b) is essentially a polyester diol based on (i) adipic acid and (ii) tetramethylene diol,

12

EP 0 259 679 B1

hexamethylene diol and mixtures of these diols,
the polyurethane being substantially free from incorporated ethylene oxide units present within terminal and/or lateral polyether chains.

2.  An adhesive as claimed in claim 1, characterized in that the diisocyanate component on which the dissolved or dispersed polyurethane is based consists of a mixture of 1,6-diisocyanatohexane and 1-isocyanato-3,3,5-trimethyl-5-isocyanatomethyl cyclohexane.

3.  An adhesive as claimed in at least one of the preceding claims, characterized in that dihydroxy polyesters having a molecular weight in the range from 400 to 10,000 are used as component b).

4.  Adhesives as claimed in at least one of the preceding claims, characterized in that the polyurethane is additionally based on c) polyhydric alcohols and/or aminoalcohols having a molecular weight in the range from 62 to 399 in a quantity of 0 to 40 equivalent percent, based on the total quantity of components b) and c).

5.  An adhesive as claimed in claim 4, characterized in that component c) is a diol containing sulfonate or carboxylate groups or carboxyl groups convertible into carboxylate groups.

6.  A process for the production of the adhesives claimed in at least one of the preceding claims by reaction of
    a) organic diisocyanates a) with
    b) organic polyhydroxyl compounds b) having a molecular weight in the range from 400 to 10,000,
    at an NCO/OH equivalent ratio maintained at 1.2:1 to 2.5:1 and subsequent chain extension of the isocyanate prepolymers thus obtained with
    d) aminic or hydrazinic chain-extending agents d).

7.  A process as claimed in claim 6, characterized in that, in addition to components a), b) and d), polyhydric alcohols and/or aminoalcohols c) having a molecular weight in the range from 62 to 399 are reacted in a quantity of 0 to 40 equivalent-%, based on the total quantity of components b) and c).

8.  The use of the adhesive claimed in at least one of the preceding claims for bonding leather, plastics, rubber materials and/or plasticized polyvinyl chloride to materials of the same kind or of different kinds.

**Revendications**

1.  Adhésif constitué essentiellement d'une solution ou d'une dispersion aqueuse d'un polyuréthane présentant, pour 100 g de matière solide, 2 à 200 milliéquivalents de groupements carboxylate et/ou sulfonate chimiquement intégrés, ledit polyuréthane étant composé des constituants suivants:
    a) diisocyanates organiques,
    b) composés dihydroxylés organiques dont le domaine de poids moléculaire s'étend de 400 à 10.000 et
    d) agents aminiques ou hydraziniques prolongateurs de chaîne dont le domaine de poids moléculaire s'étend de 32 à 400.
    caractérisé en ce que,
    a) les diisocyanates a) sont un mélange à base de 1,6-diisocyanatohexane et de 1-isocyanato-3,3,5-triméthyl-5-isocyanatométhyl-cyclohexane, chacun dans une proportion d'au moins 10 moles %, par rapport à la quantité totale des diisocyanates,
    b) le composant b) est constitué essentiellement de polyesterdiols à base de (i) acide adipique et de (ii) tétraméthylènediol, hexaméthylènediol et de mélanges de ces diols et
    en ce que le polyuréthane est pratiquement exempt d'unités d'oxyde d'éthylène intégrées, présentes au sein de chaînes de polyéther disposées en position terminale et/ou latérale.

2.  Adhésif selon la revendication 1, caractérisé en ce que le composant de diisocyanate formant la base du polyuréthane en solution ou en dispersion est constitué d'un mélange de 1,6-diisocyanatohexane et de 1-isocyanato-3,3,5-triméthyl-5-isocyanatométhyl-cyclohexane.

3.  Adhésif selon au moins une des revendications qui précèdent, caractérisé en ce que l'on utilise comme

13

composant b) du dihydroxypolyester dont l'intervalle de poids moléculaire s'étend de 400 à 10.000.

4. Matière adhésive selon au moins une des revendications qui précèdent, caractérisée en ce que le polyuréthane comprend en outre c) des polyalcools et/ou des amino-alcools d'intervalle de poids moléculaire allant de 62 à 399, dans une proportion de 0 à 40 équivalents pour cent par rapport à la quantité totale des composants b) et c).

5. Adhésif selon la revendication 4, caractérisé en ce que le composant c) est constitué de diols comportant des groupements carboxylate ou des groupements carboxyle transformables en groupements carboxylate.

6. Procédé de fabrication d'adhésif conformes à au moins une des revendications qui précèdent, par mise en réaction de
    a) diisocyanates organiques a) avec
    b) des composés polyhydroxylés organiques b) dont l'intervalle de poids moléculaire s'étend de 400 à 10.000
    en respectant un rapport d'équivalence NCO/OH de 1,2:1 à 2,5:1, suivie d'une prolongation de la chaîne des prépolymères ainsi obtenus, présentant des groupements isocyanates, à l'aide
    d) des agents aminiques ou hydraziniques prolongateurs de chaîne d).

7. Procédé selon la revendication 6, caractérisé en ce que, en plus des composants a), b) et d), des polyalcools et/ou des amino-alcools c) dont le domaine de poids moléculaire s'étend de 62 à 399 sont mis en réaction dans une proportion de 0 à 40 équivalents pour cent par rapport à la quantité totale des composants b) et c).

8. Utilisation d'un adhésif conforme à au moins une des revendications qui précèdent pour la réalisation de collages de cuir, matières plastiques, matières caoutchouteuses et/ou chlorure de polyvinyle plastifié, entre eux ou avec d'autres matières.